# EUROPEAN PATENT APPLICATION

(11) **EP 2 544 134 A1**
(43) Date of publication of application: **09.01.2013**
(21) Application number: 11250932.8
(22) Date of filing: 20.12.2011
(51) Int. Cl.: G06Q 10/06

(54) **Data processing for hiring equipment**

(30) Priority: 20.12.2010 GB 201021718
(71) Applicant: Ubrands IP Licensing Limited, Sunderland SR2 0AN (GB)
(72) Inventor: Laverick, Richard, Durham DH1 5PU (GB)
(74) Representative: Hutchinson, Claire Louise

(57) **Abstract**

Data processing is performed within a server computer to facilitate the hiring of equipment items to customers. An intelligent calendar environment is established in which an entity can have a status allocated thereto over a specified period of time. Each equipment item is defined as an equipment entity (301) within said intelligent calendar environment. Each instance of a customer is defined as a customer entity (302) within said intelligent calendar environment. The availability of each equipment item is monitored by the application of a tagging device to each said equipment item. A response is made to an order from a customer for the hire of an item of equipment over a hire period by allocating a shared status (303) within the intelligent calendar environment between a customer entity and an equipment entity.

## Description

The present invention relates to a method of performing data processing within a server computer to facilitate the hiring of equipment items to customers.

Computer based calendars operating over a network are known. Open source systems are available that establish an intelligent calendar environment in which a person can have a status allocated thereto over a specified period of time. Several formats are known for intelligent calendars of this type and a popular version creates data files identified by a .ics extension.

For the purposes of illustration, it is assumed that Thomas, Richard and Henry communicate over a network by means of an intelligent calendar. Using this environment, it is possible for Thomas to schedule a meeting with Richard, as shown at A1. This appears on Thomas's calendar.

Richard's calendar is illustrated in Figure B and for the same period or time slot region B1 identifies to Richard that he has a meeting with Thomas. Thus, Thomas has created this shared status period which appears to him as a "meeting with Richard" while appearing to Richard as an "meeting with Thomas". It is also assumed that Henry has created a meeting with Thomas and again this is shown as region A2 to Thomas as a "meeting with Henry". A similar arrangement could be used for establishing a meeting between all three which would be displayed appropriately on each individual calendar.

For the purposes of illustration, Richard has also made an entry B2 showing that on Friday he is hiring a skip and therefore may need to be at home and will not be available for meetings with Thomas and Henry. However, the specific reason why Richard is not available is not shared. This information on his own calendar is for his own purpose, in a manner substantially similar to that as indicated in a conventional paper calendar. Furthermore, this notion of a skip hire taking place again only provides information locally to Richard and has no relationship with the skip hiring company. In this example, the skip hiring company may have a paper diary including a reference to a skip being delivered to a Mr R Smith.

According to an aspect of the present invention, there is provided a method of performing data processing within a server computer to facilitate the hiring of equipment items to customers, comprising the steps of: establishing an intelligent calendar environment in which an entity can have a status allocated thereto over a specified period of time; defining each equipment item as an equipment entity within said intelligent calendar environment; defining each instance of a customer as a customer entity within said intelligent calendar environment; monitoring the availability of each equipment item by the application of a tagging device to each said equipment item; and responding to an order from a customer for the hire of an item of equipment over a hire period by allocating a shared status within the intelligent calendar environment between a customer entity and an equipment entity.

According to a second aspect of the present invention, there is provided a method of ensuring that equipment is available for face-to-face meetings between a supplier and a customer, comprising the steps of: establishing an intelligent calendar environment in which said supplier has a status allocated over a specified period of time of being with a particular client for a particular purpose, said purpose requiring one or more physical items; defining each instance of a physical item as an item entity within said intelligent calendar environment; applying an RFID tag to each physical item; maintaining a list of physical items required for each said particular purposes; and detecting the presence of said items on the person of the supplier before the supplier leaves for said face-to-face meeting.

The invention will now be described by way of example only with reference to the accompanying drawings, of which:
Figure 1 shows a server computer operating within a network;
Figure 2 illustrates a timeline;
Figure 3 illustrates an intelligent calendar environment;

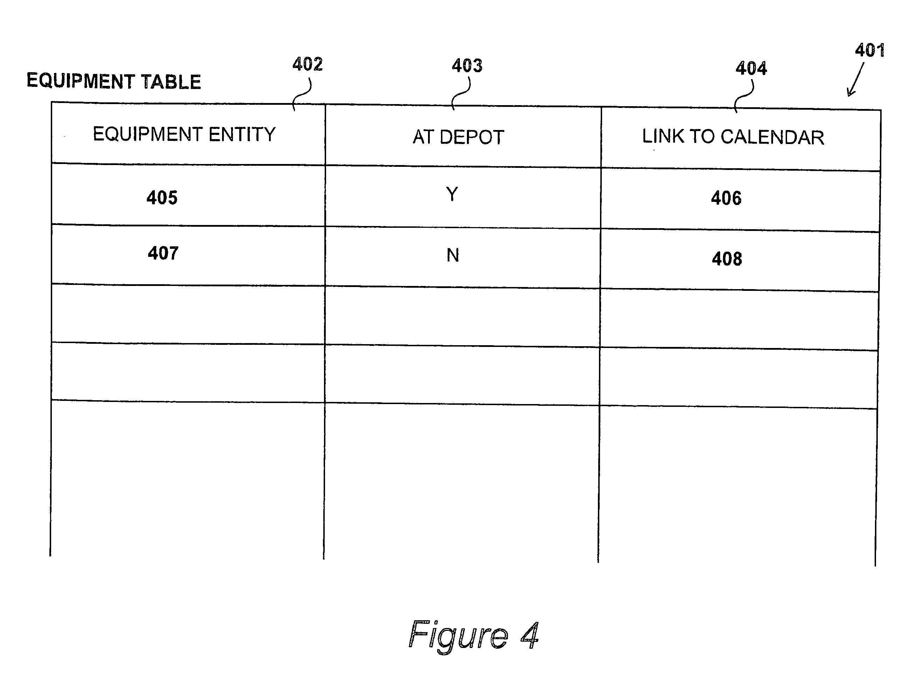

Figure 4 illustrates an equipment table;
Figure 5 shows data processing operations performed by the server computer of Figure 1;
Figure 6 shows a procedure for identifying situations where an item is overdue;
Figure 7 illustrates intelligent rescheduling; and
Figure 8 shows an enhanced intelligent calendar environment.

### Figure 1

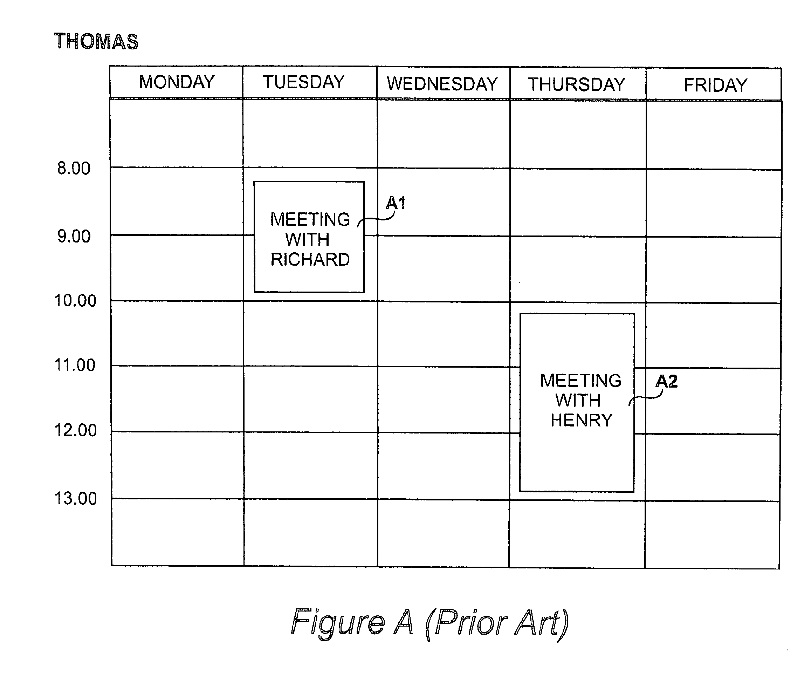

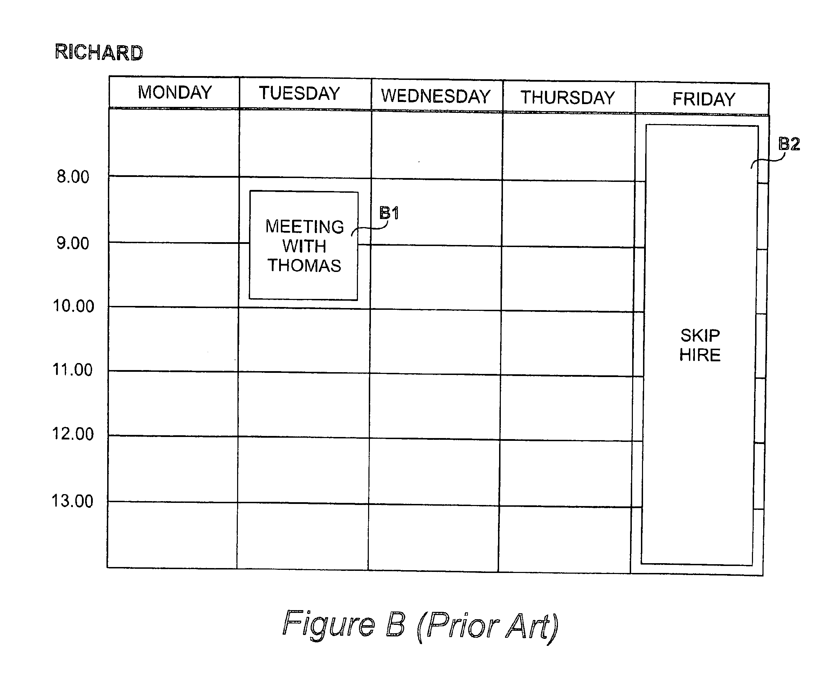

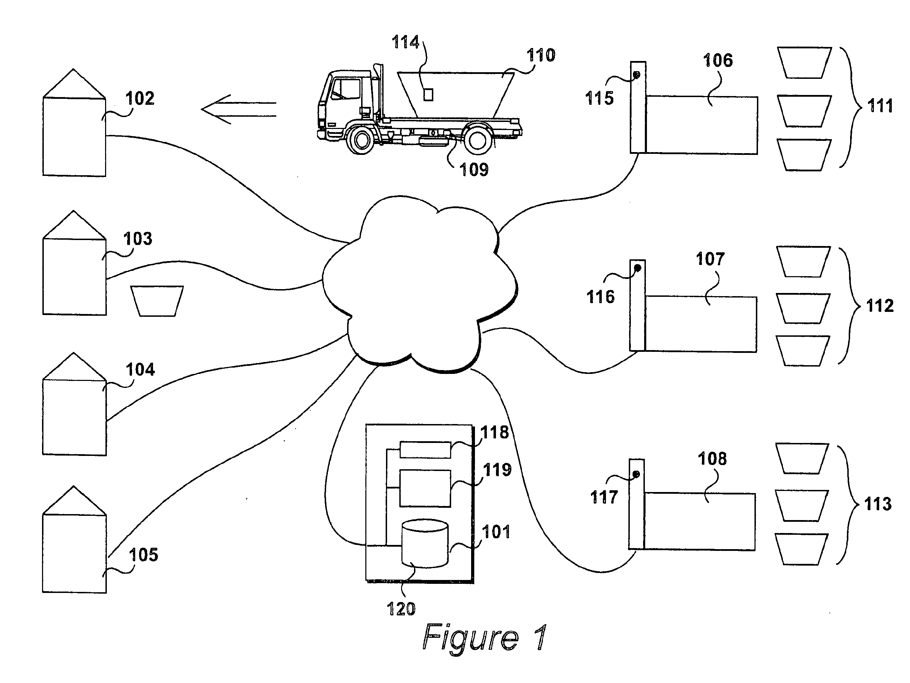

A server computer 101 is shown in Figure 1, configured to receive orders from customers 102, 103, 104, 105 etc. These orders are conveyed to vendors 106, 107, 108 etc. Each vendor has a plurality of equipment items for sale. For the purposes of illustration, the equipment consists of skips for receiving waste materials in which the skip is taken from a vendor, such as vendor 601, left with a customer, such as customer 102 for a period of time and then retrieved and returned back to the vendor 106 where the waste material is disposed of. Thus, a skip lorry 109 with a driver is shown transporting a skip 110 from vendor 106 to customer location 102. At each vendor, there is a plurality of skips, such as items 111 at vendor 106, items 112 at vendor 107 and items 113 at vendor 108.

Each of the equipment items (skips) includes a radio frequency identification (RFID) tag 114 so as to monitor the availability of these equipment items. At each vendor location 106 to 108 there is provided an RFID tag detector 115, 116, 117 respectively. These detect when an item has left the vendor's depot and then detect when the item is returned back to the vendor's depot. Each item has a uniquely coded tag therefore the server computer 101 receives information as to the whereabouts of all of the items (skips 110, 111, 112 and 113) to the extent that they are either out on hire or located at a depot and one available for hire.

In addition to typical interface circuits, the server computer 101 includes a processor 118, volatile memory 119 and non-volatile storage 120. This system within the server computer facilitates the establishment of an intelligent calendar environment in which an entity has a status allocated thereto over a specified period of time. The invention extends the principle of intelligent calendars used for arranging meetings between people in that each item of equipment is defined as an equipment entity within the intelligent calendar environment. Furthermore, each instance of a customer is defined as a customer entity within the intelligent calendar environment. In this way, it is possible for the server computer 101 to respond to an order from a customer for the hire of an item of equipment over a hire period by allocating a shared status within the intelligent calendar environment between a customer entity and an equipment entity. In this way, having received an order from a customer (say customer 102) it is possible for the server computer 101 to issue an order message to a vendor, such as vendor 106.

By the provision of the radio frequency identification tags (114) on each item (110) it is possible for the intelligent calendar environment to be updated by an intelligent rescheduling process to show that an equipment item has been returned by the detection of the identification tag. Furthermore, procedures for intelligent rescheduling may automatically detect the availability of an equipment item that has been returned earlier than expected so that it may be rescheduled for immediate use.

### Figure 2

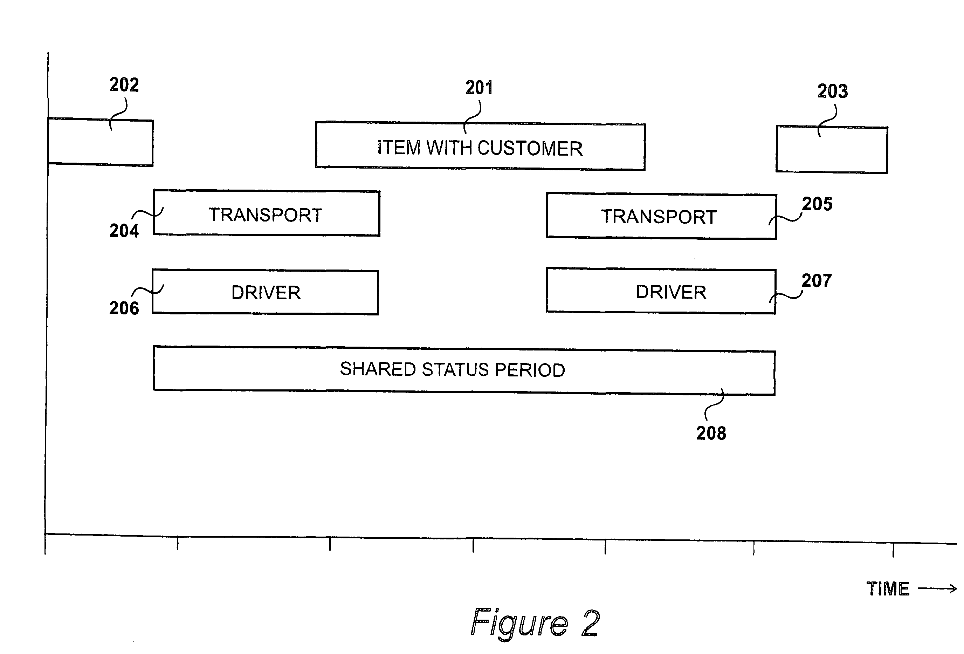

A time line is shown in Figure 2, illustrating the relationships between the entities during a skip hire operation. The skip (or item) 110 is with the customer during period 201. At period 202, before the hire, the item is available to be hired to someone else and similarly during period 203, after the hire, the item again becomes available for being hired to someone else. Gaps exist between periods 202 and 201, and again between periods 201 and 203 because the item is not available for anyone given that it is being transported to the customer 102 during period 204 or being returned to the depot 106 during period 205.

It is also appreciated that a driver is required in order to effect the transportation. Thus, a job is allocated to a driver during period 206 and again during period 207. Items for hire, customers and drivers may be each identified as an item within the intelligent calendar environment. They are linked by a shared status period 208.

### Figure 3

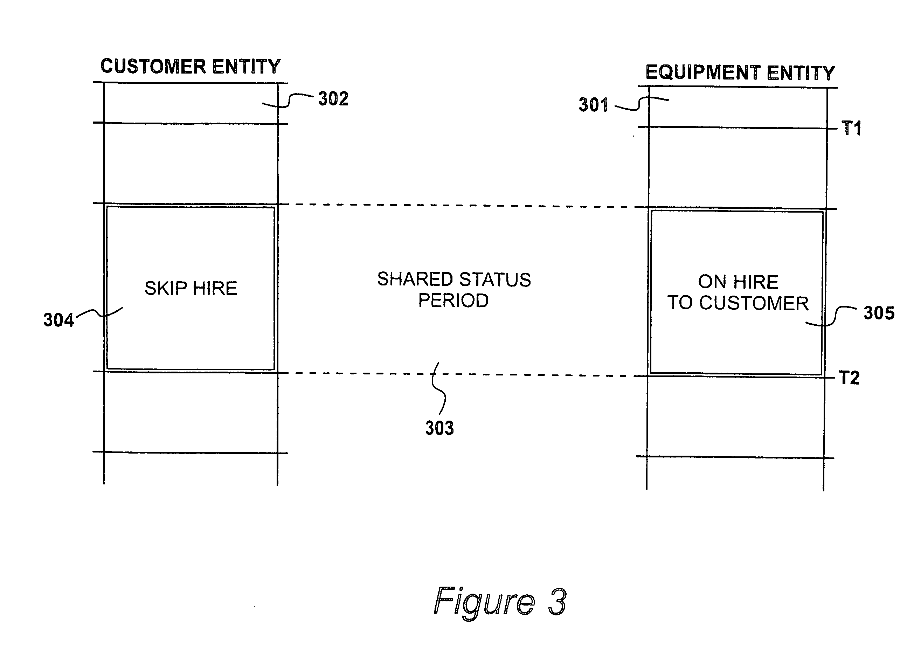

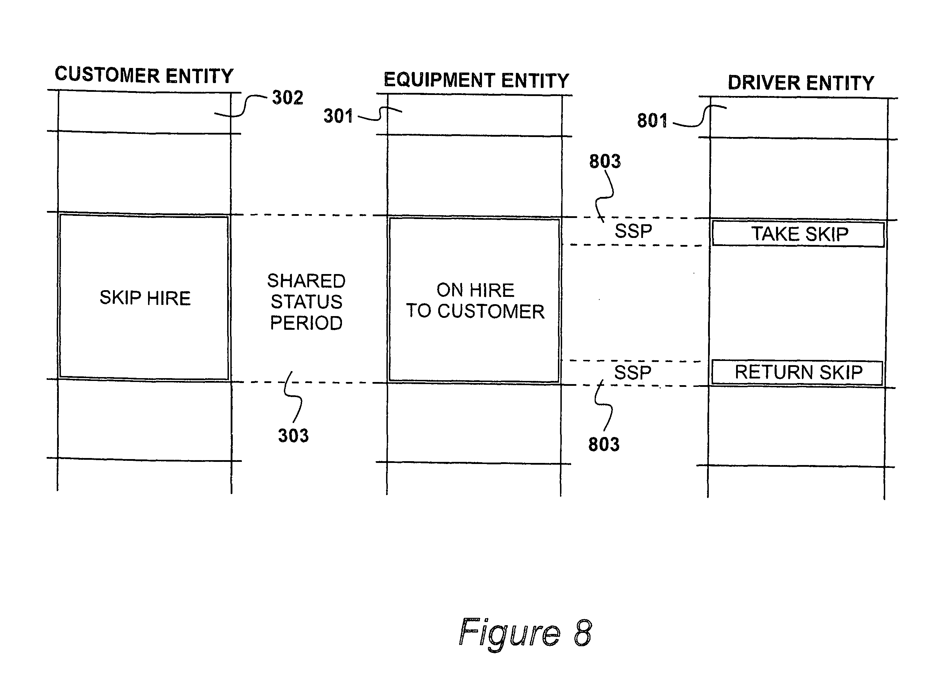

In a method embodying the present invention, data processing is performed within the sever computer 101 to facilitate the hiring of equipment items to customers. An intelligent calendar environment is established, as illustrated in Figure 3 (and Figure 8) in which an entity can have a status allocated thereto over a specified period of time. Within this embodiment, each equipment item (110, 111, 112 and 113) has an equipment entity defined within the intelligent calendar environment, such as equipment entity 301. Furthermore, each instance of a customer is defined as a customer entity, such as customer entity 302, within the intelligent calendar environment.

In the embodiment, the availability of each equipment item is monitored by the application of a tagging device to each equipment item. A response to an order from a customer for the hire of an item of equipment over a hire period is made by allocating a shared status period 303 within the intelligent calendar environment between a customer entity and an equipment entity. Thus, the creation of this shared status period is logically stating that a meeting is to occur during this period between the customer and the skip. From the operator's perspective, it is known where each piece of equipment presently resides and it is also known what the availability will look like in the future, thereby allowing the hiring of equipment to be optimised by pushing availability when high availability exists. Thus, in an online ordering environment, it will be possible to introduce discounts or other incentives during periods of high take up. Similarly, it would be possible to increase prices during periods when demand is strong.

### Figure 4

Processor 118 maintains an equipment table 401 in non-volatile storage 120. The equipment table includes a column 402 for identifying this specific entity, a column 403 indicating whether the equipment is presently residing at the depot and a column 404 including a link to the intelligent calendar environment. Enhancements to this table may include a further column identifying a specific depot (106, 107, 108) when the server computer 101 is responsible for placing orders with a plurality of providers.

In this example, a specific item of equipment is identified as 405. This is recorded as being at the depot and a link 406 is provided to the calendar.

The table also includes an equipment entity 407 which is recorded as not being in the depot and a link 408 is provided to the calendar.

### Figure 5

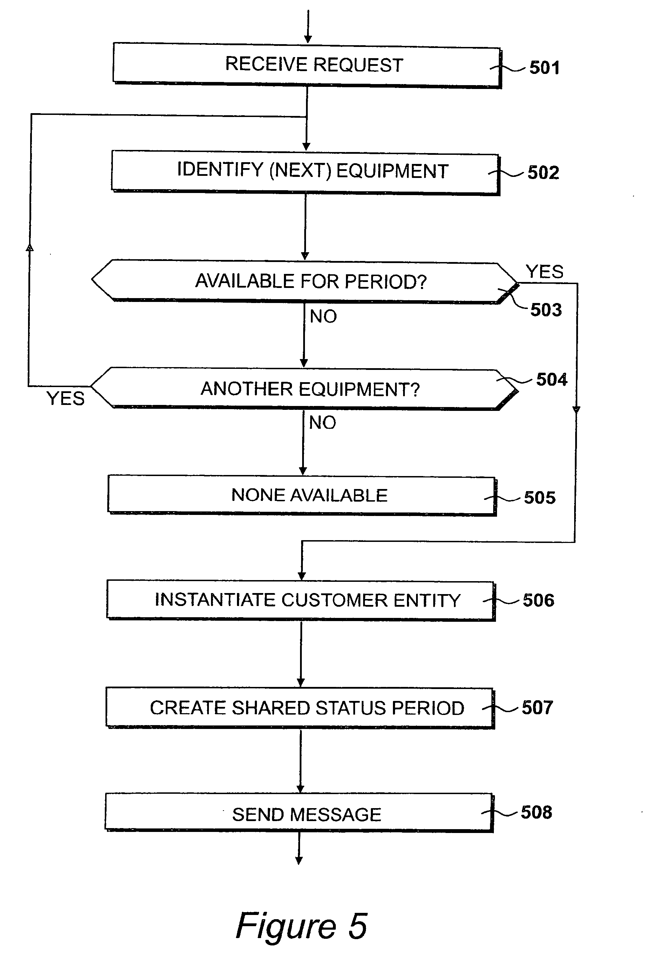

Data processing procedures performed by the server computer 101 in an embodiment of the invention are illustrated in Figure 5. At step 501 a request to hire an item of equipment is received from a customer, such as customer 102. At step 502 an identification is made of the next available equipment and at step 503 a question is asked as to whether it is available for the period of interest. If this question is answered in the negative, a question is asked at step 504 as to whether another item of equipment is available and if answered in the affirmative control is returned to step 502 for the next equipment to be identified and selected. If a question asked at step 503 continues to be answered in the negative, until all equipment's have been considered, the question asked at step 504 will be answered in the negative and a message will be generated at step 505 to the effect that none are available.

In an alternative embodiment, further measures may be invoked in situations when none are available. For example, given the geographical location of customer 102, it may be preferable to receive an item from depot 106, which is relatively close. However, if none are available, other depots, such as depot 107, may have expressed an interest in providing services to customers in a wider geographical region. Furthermore, given that it is possible for the system to identify the availability of items in their respective depots, due to the presence of the RFID tags, this process could be invoked automatically. Thus, if depot 107 also has few items available, it may decline a request to provide items outside their usual area. However, if the availability of items increases above a threshold, this may be detected within server computer 101 such that requests may be supplied from outside the usual area.

When the question asked at step 503 is answered in the affirmative, to the effect that an item is available for the requested period, a customer entity is instantiated within the intelligent calendar environment at step 506. Thus, the system has identified an equipment entity 301 at step 502 and the system then goes on to create a customer entity 302 at step 506. In an embodiment, the item entities are maintained whereas customer entities are created when required and then destroyed after use. In an embodiment, the customer entities are destroyed from the active system but details are maintained in an archive.

At step 507 a shared status period 303 is created, indicating that the customer entity 302 has a skip allocated for hire by region 304 and the identified equipment has been allocated to the particular customer entity by region 305. Thereafter, a message is sent to the vendor at step 508. This may take the form of an email message stating that a skip is to be delivered in a number of days for example. It may also include an SMS reminder closer to the event which could be conveyed directly to a driver. Furthermore, given that the server computer is aware of the geographical location of the customer, it is possible for a satellite navigation system to be instructed directly, without the driver being required to locate the position of the customer and without the driver being required to program the satellite navigation system directly. In this way, the use of drivers may be optimised within the intelligent scheduling environment.

### Figure 6

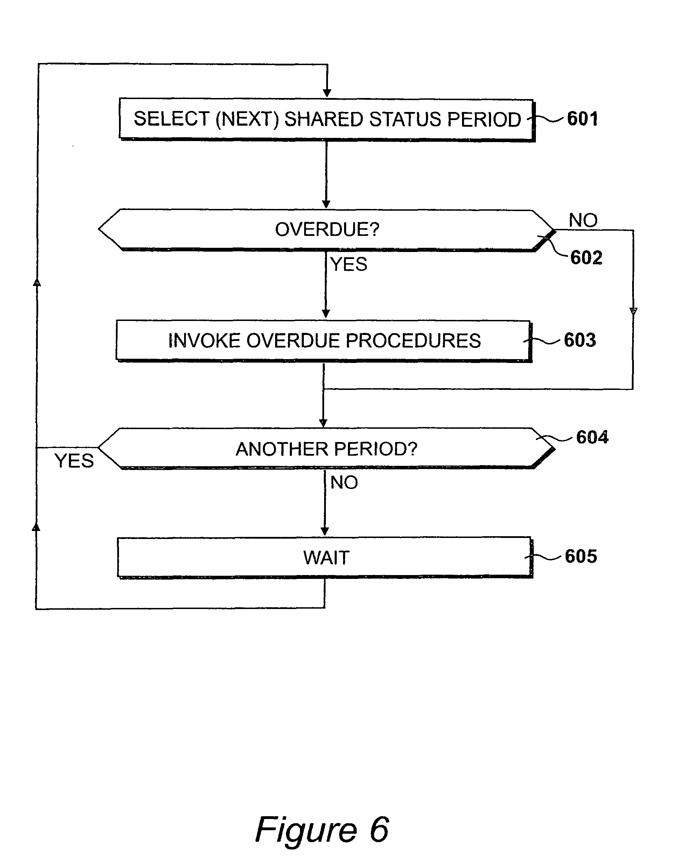

A procedure is illustrated in Figure 6, performed by the server computer 101, to identify situations where an item is overdue; having not been returned to the depot when it should have been returned to the depot. With skip hire, this situation is likely to be rare given that it is usual practice for a driver to go out and return the skip. However, problems could occur in relation to the availability of drivers or the availability of transportation. However, it should be appreciated that the embodiment may be extended to other applications where it would be necessary for a user to pick up the equipment and then return the equipment. Thus, the system could be deployed in a bicycle hire environment, in which a charge could be made for an agreed period and an excess charge could be made if the item is not returned within this period.

Periodically, the procedure identified in Figure 6 is called. At step 601 a shared status period is selected. Thus, the procedure identifies shared status period 303. The shared status period initiates at time T1 and ends at time T2. The system is aware of the actual time and therefore knows if T2 is in the future or whether T2 is in the past. In this way, it is possible for a question at step 602 to be asked as to whether the hire is overdue. When answered in the negative, control is directed to step 604 where a question is asked as to whether another period is present. When answered in the affirmative, control is returned to step 601 and the next shared status period is selected.

If the question asked at step 602 is answered in the affirmative, to the effect that the hire is overdue, overdue procedures are invoked at step 603. Thus, this could include debiting further funds from a credit card and/or issuing an SMS message to the hirer. In the skip hire environment described herein, this could invoke procedures for investigating why a driver as not as yet returned the skip.

Eventually, all of the shared status periods will have been considered resulting in the question asked at step 604 being answered in the negative. This process then enters a wait state at step 605 and is later repeated, possibly during periods of low processor activity.

It should be appreciated that the nature of the calendar may be extended significantly, in which many other events could be included as items within the intelligent calendar environment. In this way, it is possible for the intelligent calendar environment to forward plan events, obtaining data relating to traffic reports, weather conditions and other external factors that could impact upon the smooth running of the process.

### Figure 7

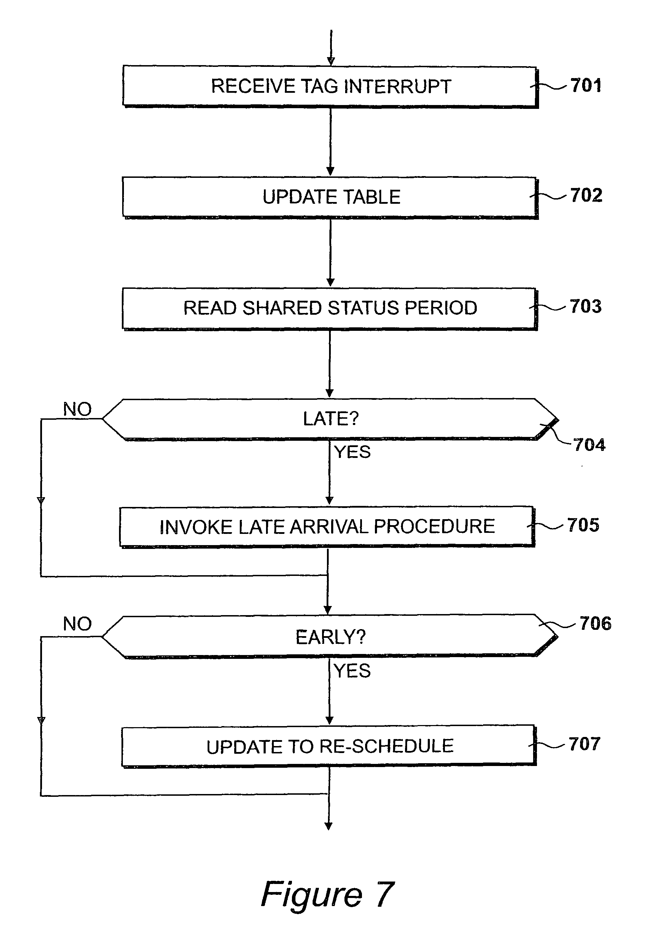

In response to items being returned, possibly early, it is possible for intelligent rescheduling to be performed within the environment, as illustrated in Figure 7.

As an item, said as item 110, is returned to depot 106, and an RFID tag 114 is detected by detector 115, a signal is transmitted to the server computer 101 and an interrupt is generated.

As illustrated in Figure 7, the processor 115 receives a tag interrupt at step 701. Each tag conveys a unique number such that the specific entity may be identified with reference to equipment table 401.

At step 702, the equipment table 401 is updated to show that the item is now available at the depot.

At step 703 the respective shared status period is read using the link in column 401.

At step 705 a question is asked as to whether the item has been returned late, by comparing the actual time of return against the scheduled time of return, i.e. T2 the end of the shared status period. If the question asked at step 704 is answered in the affirmative, late arrival procedures are invoked at step 705. These late arrival procedures are likely to include additional charges being submitted.

If the question asked at step 704 is answered in the negative, to the effect that a late arrival did not occur, a question is asked at step 706 as to whether the arrival was early. If this question is answered in the affirmative, the equipment table is updated and, within the intelligent calendar environment, it is possible to perform intelligent rescheduling. Thus, the system is aware of the fact that the item is available for hire and therefore adaptations may be made in the way in which the system responds to further requests. Procedures of this type may be particularly attractive in situations where there is a high demand for the item where, in effect, there are periods where the same item is being hired twice. Alternatively, the question asked at step 706 is answered in the negative.

### Figure 8

As previously described, situations exist where it is necessary for the equipment to be transported to a customer and then retrieved from the customer at the end of the hire period. As previously described, such a situation includes further entities, given that it is necessary to provide transportation and a driver for the transportation. As shown in Figure 8, customer entity 302 has a shared status period 303 with equipment entity 301. However, in this embodiment, a driver entity 801 has been created. The driver entity includes a first shared status period 802 with the equipment entity 301 and a second shared status period 803 with the equipment entity 301; these representing the period during which transportation takes place.

In this embodiment, the driver and the transportation are effectively seen as the same entity. Thus, separate management would be required to ensure that this combination is available during operational periods. However, in an enhanced embodiment, it is possible to separate the driver entities from the transportation entities. Thus, further shared status periods may be created during which it is necessary to provide transportation and a driver to effect transportation of an item to a customer; each of which having its own entity with an allocated status within the intelligent calendar environment. Furthermore, vehicle servicing and replacement could also be synchronised with the transportation entity, such that servicing could be effected during periods where there is low demands for the items. Similarly, driver holidays and rest periods could also be synchronised within the environment, again ensuring that it is possible for the shared status periods to be established.

In a further enhancement, driver holiday bookings could be synchronised within the environment such that holidays are only permitted when sufficient capability is available or, alternatively, measures are invoked automatically to sign on additional drivers when required.

The hire items 110 include tagging devices 114 which in an embodiment are RFID tags. It should also be appreciated that more sophisticated tagging devices could be used such that, for example, GPS detecting devices could be used within the vehicles 109, where power is available. In this way, it would be possible to record when the vehicles are available at depot 106 but it would also be possible to record the actual whereabouts or the vehicles, confirming that a vehicle has travelled to a customer for example.

In a further embodiment, it is possible for the environment, in which calendar entities are created for times and objects, to facilitate face-to-face meetings in which, for example, Richard has a physical face-to-face meeting with Thomas. In this embodiment, an intelligent calendar environment is established in which a supplier has a status allocated over a specific period of time for being with a particular client for a particular purpose that requires one or more physical items. Thus, in addition to defining entities within the calendar environment for the people attending the meeting, in this embodiment, each instance of a physical item is also defined as an item entity within the intelligent calendar environment. An RFID tag (or similar) is applied to each physical item and a list is maintained of physical items required for each particular purpose. The presence of items is detected on the person of the supplier before the supplier leaves for the face to face meeting. Thus, an RFID detector could be included in a hallway or a doorway and a check is automatically made to the effect that the necessary equipment or paperwork is being taken to the meeting.

It is also possible for people to be fitted with tags or detectors which provide location data. The location data is supplied to the intelligent calendar environment such that it is then possible for the intelligent calendar to message someone who has organised a meeting with someone else if the intelligent calendar sees from real-time input location data that the person is not going to be able to make the appointment. Thus, attendees could be informed that one of their number will be unable to make the meeting by receiving live GPS location data confirming that the person is stuck in traffic for example. Thus, the live GPS location data is automatically relayed to the third party with the intelligent calendar being updated in real-time. In a further enhancement, the intelligent calendar automatically reschedules the meeting for a time when all are free and all are available.

## Claims

1. A method of performing data processing within a server computer to facilitate the hiring of equipment items to customers, comprising the steps of:
establishing an intelligent calendar environment in which an entity can have a status allocated thereto over a specified period of time;
defining each equipment item as an equipment entity within said intelligent calendar environment;
defining each instance of a customer as a customer entity within said intelligent calendar environment;
monitoring the availability of each equipment item by the application of a tagging device to each said equipment item; and
responding to an order from a customer for the hire of an item of equipment over a hire period by allocating a shared status within the intelligent calendar environment between a customer entity and an equipment entity.

2. The method of claim 1, wherein said tagging device is a radio frequency identification device (RFID) tag.

3. The method of claim 1, wherein said equipment is collected from a storage station by a customer and used by said customer.

4. The method of claim 3, wherein the operational equipment is returned to said storage station by the customer after the hire period.

5. The method of claim 3, wherein the operational equipment is monitored as being at the storage station or on hire.

6. The method of claim 5, wherein an alarm signal is generated if the number of items detected as being at the storage station is less than a known total of items less the number of items that are out on hire.

7. The method of claim 1, wherein the intelligent calendar environment is analysed to identify equipment items that are out on hire but are due to be returned within a predetermined interval.

8. The method of claim 1, wherein said equipment is transported to a customer and retrieved from said customer at the end of said hire period.

9. The method of claim 8, wherein:
items of transportation equipment for transporting operational equipment to a customer are each defined as a transport entity within the intelligent calendar environment; and
each driver of said transportation equipment is defined as a driver entity within the intelligent calendar.

10. The method of claim 9, wherein:
a delivery to a customer is identified as a first shared status, use by a customer is identified as a second share status and a retrieval from a customer is identified as a third shared status.

11. The method of claim 10, further comprising the steps of allocating a shared status within the intelligent calendar environment between a customer entity, an equipment entity, a transport entity and a driver entity during said first shared status.

12. The method of claim 8, wherein transportation equipment for transporting operational equipment includes a tracking device using global positioning.

13. The method of claim 1, including the steps of analysing the intelligent calendar environment to identify situations where an item is overdue.

14. A method of ensuring that equipment is available for face-to-face meetings between a supplier and a customer, comprising the steps of:
establishing an intelligent calendar environment in which said supplier has a status allocated over a specified period of time of being with a particular client for a particular purpose, said purpose requiring one or more physical items;
defining each instance of a physical item as an item entity within said intelligent calendar environment;
applying an RFID tag to each physical item;
maintaining a list of physical items required for each said particular purposes; and
detecting the presence of said items on the person of the supplier before the supplier leaves for said face-to-face meeting.

15. The method of claim 13, wherein said physical items include documents.

16. The method of claim 13, wherein each instance of a customer is defined as an entity within the intelligent calendar environment.

17. Apparatus for processing data, comprising a server computer configured to receive orders from customers and to convey said orders to vendors, wherein:
each of said vendors has a plurality of equipment items for hire;
each of said equipment items includes a radio frequency identification device (RFID) tag so as to monitor the availability of said equipment items;
said server computer establishes an intelligent calendar environment in which an entity has a status allocated thereto over a specified period of time;
each item of equipment is defined as an equipment entity within said intelligent calendar environment;
each instance of a customer is defined as a customer entity within said intelligent calendar environment;
said server computer responds to an order from a customer for the hire of an item of equipment over a hire period by allocating a shared status within the intelligent calendar environment between a customer entity and an equipment entity; and
said server computer issues an order message to a vendor.

18. The apparatus of claim 17, wherein said identification tag is a radio frequency identification device (RFID) tag.

19. The apparatus of claim 17, wherein said intelligent calendar environment is updated to show that an equipment item has been returned by the detection of said identification tag.

20. The apparatus of claim 19, including the intelligent re-scheduling of the availability of an equipment item detected as being returned when returned earlier than expected.
